# EUROPEAN PATENT APPLICATION

(11) **EP 4 840 524 A1**
(43) Date of publication of application: **18.11.2026**
(21) Application number: 26178869.9
(22) Date of filing: 15.05.2026
(51) Int. Cl.: A63F 13/352, A63F 13/355

(54) **ZONING SERVER, ZONING SYSTEM, ZONING METHOD, AND ZONING PROGRAM**

(30) Priority: 15.05.2025 JP 2025082091
(71) Applicant: SNK Corporation, Osaka-shi, Osaka 5320003 (JP)
(72) Inventor: TERAI, Takatoshi, OSAKA-SHI, OSAKA (JP); SATO, Yukitoshi, NAGOYA-SHI, AICHI (JP)
(74) Representative: Algemeen Octrooi- en Merkenbureau B.V.

(57) **Abstract**

A zoning system (1) comprising: a plurality of management servers (20) configured to provide respective portions of virtual space (2); and a zoning server (10) configured to allocate the respective portions of virtual space (2) to the management servers (20), wherein the zoning server (10) includes: an acquisition unit (110) configured to periodically acquire, from the management servers (20), at least character information indicating a number of characters operated by players included in the portion of the virtual space (2); a division unit (120) configured to divide the virtual space (2) into a plurality of zones on the basis of the character information such that, when the number of characters is greater, a corresponding zone becomes relatively narrower, and, when the number of characters is less, a corresponding zone becomes relatively wider; and an allocation unit (130) configured to allocate each of the zones divided by the division unit (120) to a corresponding management server (20). The management servers (20) each include: a reception unit (210) configured to receive, from a player terminal (30) operating a character included within a range indicated by the zone allocated by the allocation unit (130) as the portion of the virtual space (2), an operation command; and an output unit (260) configured to output, to the player terminal (30), image information of the virtual space (2) corresponding to the zone in which the character is operated on the basis of the operation command received by the reception unit (210).

## Description

### BACKGROUND OF THE INVENTION

### 1. Field of the Invention

The present invention relates to a zoning server, zoning system, zoning method, and zoning program.

### 2. Description of Related Art

Online competitive games in which a plurality of players participate in a game using Internet communication have become popular in recent years. These online competitive games further include patterns such as one-on-one games, one-to-many games, many-to-many games, and multiplayer cooperative battle games, allowing players to enjoy them in accordance with their preferences and strategies.

A distributed data processing method disclosed in Japanese Unexamined Patent Application Publication No. 2007-528762 manages a game space on a zone-by-zone basis, and allocates a dedicated server to each zone, thereby achieving distribution of server load and efficient data management. In addition, the buffer sector mechanism enables the system to maintain a seamless connection and provide a comfortable gameplay experience even when a player moves.

In the network game system disclosed in Japanese Unexamined Patent Application Publication No. 2006-191975, a central management server properly manages the connections of the players and distributes the load per area to ensure smooth game play. In particular, dynamic allocation and management of area servers enable optimization of server resources and provide a flexible gaming environment allowing a considerable number of players to play simultaneously.

### SUMMARY OF THE INVENTION

Meanwhile, in a massively multiplayer online role-playing game (MMORPG), since a considerable number of players access the game server, the amount of processing that can guarantee real-time performance may exceed the physical performance limit of a machine for the game server. When delays occur due to information processing in the game, a discrepancy between the operations of the player and the reflections in the game is caused, resulting in a problem in that the real-time performance of the game is compromised.

Accordingly, the present invention has been made in view of the above problem, and an object thereof is to provide a zoning server and a zoning system capable of reducing the load on a game server in a multiplayer game accessed by a plurality of players.

A zoning system according to an embodiment of the present invention may include: a plurality of management servers configured to provide respective portions of virtual space; and a zoning server configured to allocate the respective portions of virtual space to the management servers,. The zoning server may include: an acquisition unit configured to periodically acquire, from the management servers, at least character information indicating a number of characters operated by players included in the portion of the virtual space; a division unit configured to divide the virtual space into a plurality of zones on the basis of the character information such that, when the number of characters is greater, a corresponding zone becomes relatively narrower, and, when the number of characters is less, a corresponding zone becomes relatively wider; and an allocation unit configured to allocate each of the zones divided by the division unit to a corresponding management server. The management servers each may include: a reception unit configured to receive, from a player terminal operating a character included within a range indicated by the zone allocated by the allocation unit as the portion of the virtual space, an operation command; and an output unit configured to output, to the player terminal, image information of the virtual space corresponding to the zone in which the character is operated on the basis of the operation command received by the reception unit.

In the zoning system according to an embodiment of the present invention, the management servers each may further include: a determination unit configured to determine, on the basis of the operation command, whether the character in the zone crosses a boundary of the zone; a switching unit configured to switch, if the character crosses the boundary, the management server to a management server of a zone to which the character belongs; and an information transmission unit configured to transmit information on the zone to the zoning server.

A zoning method according to an embodiment of the present invention performed by a computer of a zoning server in a zoning system including a plurality of management servers configured to provide respective portions of virtual space; and the zoning server configured to allocate the respective portions of the virtual space to the management servers, where the zoning method may cause the computer to perform the steps of: periodically acquiring, from the management servers providing the respective portions of the virtual space, at least character information indicating a number of characters operated by players included in the respective portions of the virtual space; dividing the virtual space into a plurality of zones on the basis of the character information such that, when the number of characters is greater, a corresponding zone becomes relatively narrower, and, when the number of characters is less, a corresponding zone becomes relatively wider; and allocating the respective zones divided in the dividing step to the corresponding management servers.

A zoning program according to an embodiment of the present invention may cause a computer of a zoning server in a zoning system including a plurality of management servers configured to provide respective portions of virtual space; and the zoning server configured to allocate the respective portions of the virtual space to the management servers, to execute the functions of: periodically acquiring, from the management servers providing the respective portions of the virtual space, at least character information indicating a number of characters operated by players included in the respective portions of the virtual space; dividing the virtual space into a plurality of zones on the basis of the character information such that, when the number of characters is greater, a corresponding zone becomes relatively narrower, and, when the number of characters is less, a corresponding zone becomes relatively wider; and allocating the respective zones divided by the dividing function to the corresponding management servers.

The zoning server, zoning system, zoning method, and zoning program of the present disclosure can equalize the number of characters belonging to each zone and reduce the processing load bias among servers.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows an example of a system diagram illustrating a configuration example of a zoning system according to a present disclosure,
FIG. 2 shows a block diagram illustrating a configuration example of a zoning server according to the present disclosure,
FIG. 3 shows a block diagram illustrating a configuration example of a management server according to the present disclosure,
FIG. 4 shows a diagram illustrating an example in which a virtual space according to the present disclosure is divided into a plurality of zones,
FIG. 5 shows an example in which a virtual space according to the present disclosure is divided into a plurality of zones and the areas thereof are adjusted,
FIG. 6 shows an example of a sequence diagram illustrating an operation of the zoning system according to the present disclosure,
FIG. 7 shows a flowchart illustrating an example of an operation of the zoning server according to the present disclosure, and
FIG. 8 shows a flowchart illustrating an example of an operation of the management server according to the present disclosure.

### DETAILED DESCRIPTION OF EMBODIMENTS

### Overview

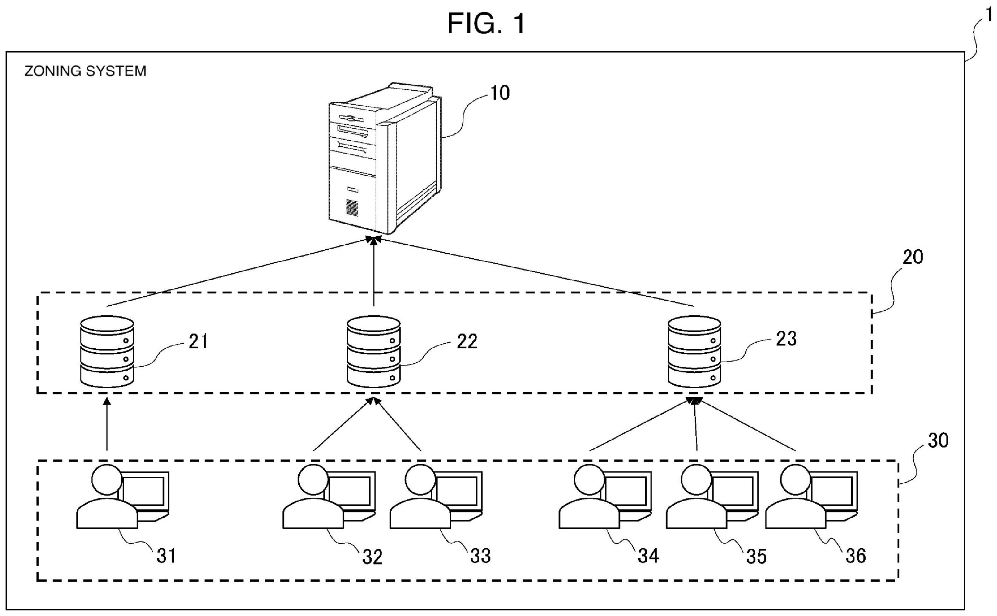

FIG. 1 shows a system diagram illustrating an example of a configuration of a zoning system 1 according to the present disclosure. As illustrated in FIG. 1, the zoning system 1 according to the present embodiment includes a zoning server 10, a plurality of management servers 20 (management server A 21, management server B 22, management server C 23, ...), and a plurality of player terminals 30 (player terminal A 31, player terminal B 32, player terminal C 33, player terminal D 34, player terminal E 35, player terminal F 36, ...), and the respective components are communicably connected via the Internet. The number of player terminals and management servers is not limited to the number shown in FIG. 1.

The zoning system 1 according to the present disclosure is directed to a system that provides a virtual space in which characters operated by players move and perform interactions (for example, battle, exploration, communication, attack, and defense) with other characters or objects, and distributes processing load in the virtual space by zoning the virtual space in accordance with the number of characters in the virtual space. The zoning according to the present embodiment is directed to a process of dividing the virtual space in the game into a plurality of different areas (zones) and allocating the divided zones to any of the management servers. Accordingly, each divided zone corresponds to a predetermined range defined by zoning of a part of the virtual space, and each management server manages the corresponding zone, which is a part of the virtual space, and information regarding the characters present in the zone. In this configuration, the zoning server 10 is configured to zone the provided virtual space, and distributes the processing load among the management servers 20 by zoning the virtual space in accordance with the number of characters. Specifically, the zoning server 10 has a function of receiving and processing various types of information regarding the characters from the management servers 20, and dividing the virtual space in the game into a plurality of zones on the basis of the various types of information. Further, the zoning server 10 adjusts the processing load of the management servers 20 by allocating the divided zones to the management servers 20. Each zone has multiple characters operated by the users, and the zoning server 10 acquires information regarding the characters from the management servers 20 that manage the corresponding zones and adjusts the area of each zone, thereby distributing the processing load of the entire virtual space to be equalized among the management servers.

Each management server 20 is configured to provide a part of the virtual space corresponding to the zone allocated by the zoning server 10, receive various types of information from the player terminals 30, and manage a part of the virtual space. The portions of the virtual space provided by the respective management servers in the zoning system 1 (i.e., portions of the virtual space corresponding to the allocated zones) are different from one another. Specifically, in the zoning system 1 according to the present embodiment, a plurality of management servers (i.e., the management servers 20) are provided, and the management servers 20 receive, from the player terminals 30 that operate characters present in the zones managed thereby, operation commands entered by the players for causing the characters as operation targets to operate in accordance with the intentions of the players (for example, commands indicating movement of the characters, commands to attack objects or other characters present in the virtual space, commands to use items in the game, and commands to defend against attacks from other objects or characters), thereby controlling the characters operated by the players. When a character moves from one zone to another, the management server 20 simultaneously switches from the management server managing the first zone to the management server managing the destination zone and accepts operation commands from the player terminal that is capable of operating the character. Further, the management server 20 displays, on the player terminal 30 corresponding to a character present in the zone, an image indicating a part of the virtual space currently managed thereby. As an example, when the management server 20 moves a character only within the range of the zone corresponding to the management server 20 on the basis of operation commands entered by the player on the player terminal 30, the management server may receive operation commands from a player terminal that is capable of operating the character and operate the character without switching to another management server. In contrast, when the management server 20 moves a character to a position outside the range indicated by the zone corresponding to the management server 20 on the basis of operation commands entered by the player on the player terminal 30, the management server may switch to a management server that manages a zone including the resultant position after movement, and may receive operation commands from a player terminal that is capable of operating the character and operate the character. The operation commands according to the present embodiment are not limited thereto, and may include commands to operate a menu and commands indicating selection of a quest or mission.

Each player terminal 30 is directed to a dedicated or general-purpose electronic device for a player to play games. Specifically, the player terminal 30 according to the present disclosure may be implemented by a home video game console, portable game machine, arcade game machine, personal computer, smartphone, or tablet, and transmits various operation commands to the management server 20 using a console, controller, and keyboard, for example. A plurality of player terminals 30 are provided in the present embodiment (player terminal A 31, player terminal B 32, player terminal C 33, player terminal D 34, player terminal E 35, player terminal F 36, ...), and each player terminal is connected to the management server 20 via a network NW. The player terminal 30 transmits operation commands to the management server 20 that the player enters to operate the character, and the management server 20 controls the character on the basis of the operation commands received from the player terminal 30.

The network NW may include wireless and wired networks. As an example, the network NW may correspond to a wireless LAN (WLAN), a wide area network (WAN), wireless LANs, a fourth-generation communication system (4G), a fifth-generation communication system (5G), a sixth-generation communication system (6G) or later mobile communication system, for example. The network NW is not limited to these examples and may correspond to, for example, a public switched telephone network (PSTN), optical line, or satellite communication network. The network NW may also be a combination of these.

### Configuration of Zoning Server 10

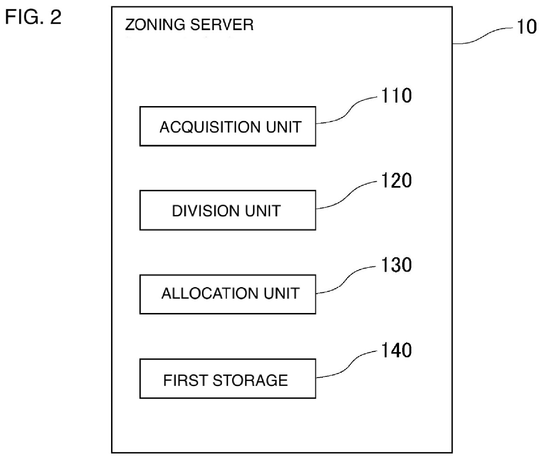

FIG. 2 shows a block diagram illustrating an example of a configuration of the zoning server 10. The zoning server 10 according to the present embodiment includes an acquisition unit 110, a division unit 120, an allocation unit 130, and a first storage 140. Hereinafter, the components of the zoning server 10 will be described in detail.

The acquisition unit 110 is configured to periodically acquire, from the management server 20, at least character information indicating the number of characters operated by the players in a part of the virtual space. Specifically, the acquisition unit 110 according to the present disclosure as a component of the zoning server 10 periodically acquires, from multiple management servers 20, information regarding the number of characters present in the zones managed by the management servers 20. If a character acts within a zone, the acquisition unit 110 may acquire information regarding the number of characters present in that zone from the management server 20. As an example, if the number of characters in a zone managed by the management server A 21 is two, the acquisition unit 110 may acquire information regarding the number of characters from the management server A 21 as "2".

The acquisition unit 110 may also acquire, from the management server 20, character information indicating the number of characters in the zone after the character has moved. As an example, if the number of characters in the first zone managed by the management server A 21 is two and the number of characters in the second zone managed by the management server B 22 is four, and one character in the first zone is moved to the second zone by the operation commands of the player, the acquisition unit 110 may acquire information regarding the number of characters from the management server A 21 and the management server B 22 as "1" and "5", respectively.

Further, the method by which the acquisition unit 110 acquires information regarding the number of characters from the management server 20 is not limited; the acquisition unit 110 may acquire the information regarding the number of characters by transmitting a request to the management servers 20 at predetermined time intervals by periodic polling, or the management servers 20 may notify the acquisition unit 110 in real time by an event notification method (WebSocket/Webhook) when detecting a change in the number of characters in each zone, and the acquisition unit 110 may receive the notification and acquire the information regarding the number of characters, or the acquisition unit 110 may acquire the number of characters from the management servers 20 as appropriate.

The division unit 120 is configured to divide the virtual space into a plurality of zones, and to divide the virtual space on the basis of the character information such that a zone becomes relatively narrower when the number of characters is relatively large and such that a zone becomes relatively wider when the number of characters is relatively small. Specifically, the division unit 120 according to the present disclosure has a function of dividing the virtual space into zones (hereinafter, referred to as the division function) and a function of adjusting the area of the divided zones (hereinafter, referred to as the adjustment function). These functions will be described below.

The division function of division unit 120 is directed to a function that divides the virtual space for games generated by the zoning system 1 into a plurality of zones in accordance with predetermined rules. Specifically, the virtual space according to the present embodiment corresponds to a three-dimensional digital world generated by the zoning system 1, and a plurality of game-related objects are arranged inside the virtual space. Further, the virtual space according to the present disclosure is applied to a spatial coordinate system, and all objects and characters in the virtual space operable by the players have their own coordinate information. The division unit 120 divides the virtual space in accordance with the number of management servers 20 on the basis of the coordinate information of the virtual space. As an example, if the virtual area of the virtual space generated by the zoning system 1 is "100" and four management servers 20 are provided in the zoning system 1, the division unit 120 divides the virtual space for each management server 20. In this case, the areas of all the divided zones may be "25" or the areas may vary depending on the number of objects or objects present in the zone.

The adjustment function of the division unit 120 is directed to a function that adjusts the area of each zone in accordance with the number of characters in the virtual space after the virtual space generated by the zoning system 1 is evenly divided. Specifically, the zoning server 10 receives, from the management servers 20, information regarding the number of characters in the respective zones. The division unit 120 adjusts the areas of the divided zones mentioned above in accordance with the number of characters in the respective zones. If the number of characters is greater than those of other zones, the division unit 120 may adjust the area of that zone such that the area becomes narrower in accordance with the number of characters present in that zone. In contrast, if the number of characters is less than those of other zones, the division unit 120 may adjust the area of that zone such that the area becomes wider in accordance with the number of characters present in that zone. The method of adjusting the area of the zones is not limited; the division unit 120 may adjust the area of each zone in proportion to the number of characters present in the zone, or it may adjust the area of each zone in proportion to the area occupied by each character in the virtual space. Although the virtual space is evenly divided first and then the area of each zone is adjusted, the system may be configured such that the virtual space may be divided into a plurality of zones from the beginning so that the number of characters allocated to each zone (i.e., the processing load in accordance with the number of characters) is even.

The allocation unit 130 is configured to allocate the respective zones that are divided and adjusted by the division unit 120 to corresponding management servers 20. Specifically, the division unit 120 divides and adjusts the virtual space in accordance with the information regarding the number of characters, and the allocation unit 130 allocates the respective adjusted zones such that one zone corresponds to one management server. Each management server may manage the zone allocated by the allocation unit 130 and distribute the processing load by the management server 20.

The first storage 140 is directed to a storage medium that stores various programs and data needed by the zoning server 10 to operate. The first storage 140 may be implemented by, for example, but not limited to, a hard disk drive (HDD), solid state drive (SSD), or flash memory. Further, the first storage 140 may configure read only memory (ROM) or random access memory (RAM) as a work area in executing the program. Moreover, the first storage 140 may store information received from the management server 20 regarding the number of characters at each point in time.

### Configuration of Management Server 20

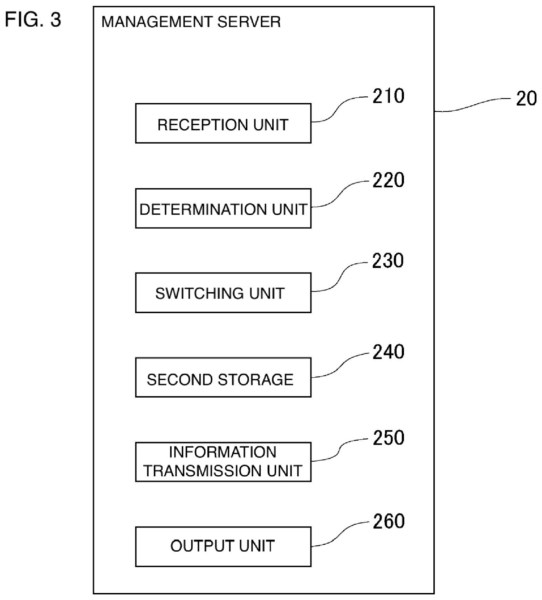

FIG. 3 shows a block diagram illustrating an example of a configuration of the management server 20. The management server 20 according to the present embodiment includes a reception unit 210, a determination unit 220, a switching unit 230, a second storage 240, an information transmission unit 250, and an output unit 260. The respective components of the management server 20 will be described in detail below.

The reception unit 210 accepts information indicating operation commands from player terminals that operate characters included within the range indicated by the zone, with the zone allocated by the allocation unit 130 as a part of the virtual space. Specifically, the reception unit 210 according to the present disclosure receives operation commands only from the player terminals that operate the characters present in the zone managed by the management server, and does not receive operation commands from player terminals that operate characters outside the range of the zone managed thereby.

The determination unit 220 is configured to determine whether a character in the zone crosses the boundary of that zone. Specifically, in the virtual space according to the present embodiment, the zone managed by the management server 20 has coordinate information on the X and Y axes. If the coordinate information of a character in the zone is outside the range of the coordinate information of the zone (that is, if the X-axis information and the Y-axis information of the character are greater than or less than at least one of the X-axis information and the Y-axis information of the zone), the determination unit 220 may determine that the character crosses the boundary of the zone. In contrast, if the coordinate information of a character in the zone is within the range of the coordinate information of the zone (that is, if the X-axis information and the Y-axis information of the character are included in the X-axis information and the Y-axis information of the zone), the determination unit 220 may determine that the character does not cross the boundary of the zone.

The switching unit 230 is configured, when the character crosses the boundary, to switch the management server 20 to a management server for a zone to which the character belongs on the basis of the determination result of the determination unit 220. Specifically, if the character does not cross the boundary of the zone according to the determination by the determination unit 220, the switching unit 230 need not switch the management server 20. In contrast, if the character crosses the boundary of the zone according to the determination by the determination unit 220, the switching unit 230 notifies another management server that the character of the player moves from the zone managed by its own server to the zone managed by the other management server, and access from the player terminal is switched to the other management server. At this time, the player terminal that operates the character stops transmitting information to the management server before switching, and transmits the information to the management server that manages the zone in which the character is currently present.

The second storage 240 has the same configuration as that of the first storage 140 and corresponds to a storage medium that stores various programs and data needed by the management server 20 to operate. The second storage 240 may be implemented by, for example, but not limited to, a hard disk drive (HDD), solid state drive (SSD), or flash memory. Further, the second storage 240 may configure read only memory (ROM) or random access memory (RAM) as a work area in executing the program. Moreover, the second storage 240 may store information indicating operation commands received from a plurality of player terminals 30 and information regarding the number of characters in the zone to which the management server 20 belongs.

The information transmission unit 250 is configured to transmit, to the zoning server 10, information regarding a zone managed by the management server 20. The information transmission unit 250 periodically transmits, to the zoning server 10, information indicating the number of characters in the zone. Upon transmission by the information transmission unit 250, the zoning server 10 may zone the virtual space and adjust the areas of the respective zones on the basis of the information, or may zone the virtual space and adjust the areas of the respective zones on the basis of the information regarding the number of characters. The information transmitted by the information transmission unit 250 is not limited to the information regarding the number of characters. The information transmission unit 250 may transmit, to the zoning server 10, information indicating a state of a character (which may include physical strength of the character, and attribute information of the character, for example), information indicating a state of an object in the zone (which may include information indicating whether the object has been destroyed), time information in the zone, and weather information, for example. When the zoning server 10 receives information other than the information regarding the number of characters, the zoning server 10 may zone the virtual space in accordance with the processing load resulting from the respective items of information.

The output unit 260 is configured to output, to the player terminal 30, image information of the virtual space including a range in which a character of a player is present in a zone managed by its own server on the basis of the operation commands received by the reception unit 210 from the information transmission unit 250. Specifically, the output unit 260 according to the present disclosure outputs image information within each zone to the player terminal 30 after the zoning server 10 divides the virtual space and allocates the divided zones to the respective management servers. At this time, the player may check the behavior of the character the player is operating on the player terminal 30. The image information according to the present embodiment may correspond to information that integrates the behavior or state of characters or objects in the virtual space, time information in the virtual space, and weather information, for example.

### Example 1

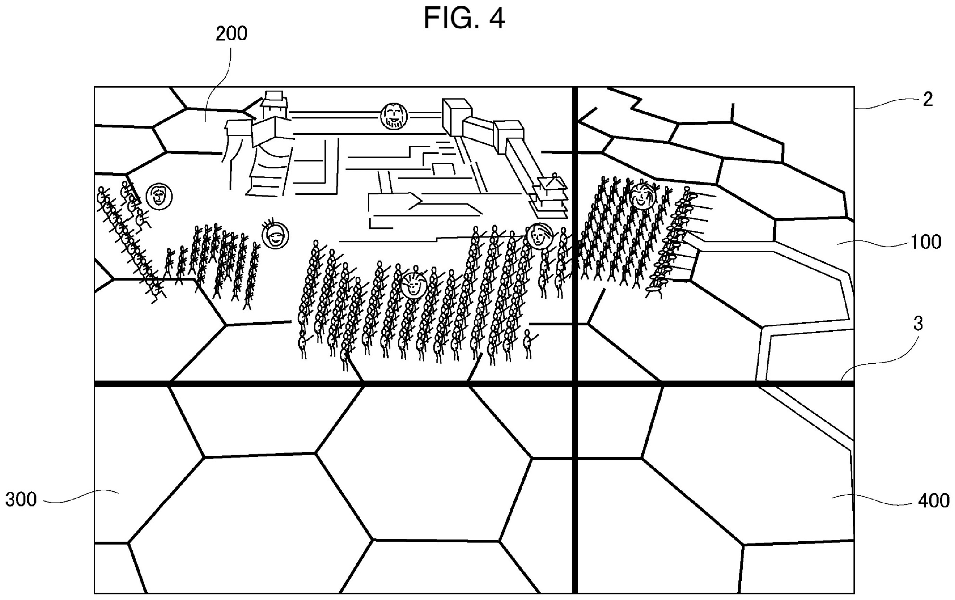

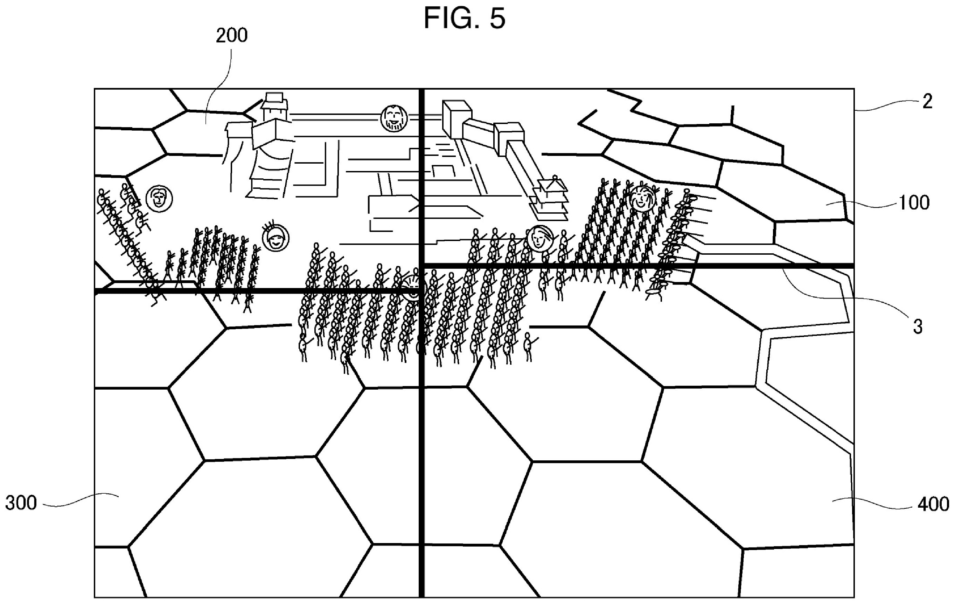

Hereinafter, with reference to FIGS. 4 and 5, the first example of zoning the virtual space by the zoning server 10 will be described. FIG. 4 shows an example of how the zoning server 10 divides the virtual space. In the present example, the zoning server 10 divides the virtual space 2 into a first zone 100, a second zone 200, a third zone 300, and a fourth zone 400 by boundary lines 3, and the respective zones are managed by different management servers. For convenience of description, the first zone 100 is assumed to be managed by the management server A 21, the second zone 200 by the management server B 22, the third zone 300 by the management server C 23, and the fourth zone 400 by the management server D 24, respectively. As the game progresses, the characters in the virtual space 2 move among the respective zones.

FIG. 5 shows an example in which a virtual space according to the present disclosure is divided into a plurality of zones and the areas thereof are adjusted. After the characters have moved, the zoning server 10 adjusts the area of each zone in accordance with the number of characters in the zone. In this case, if the number of characters in the zone is relatively large, the zoning server 10 may adjust the area of the zone, which is a part of the virtual space 2, by the boundary lines 3 such that the area becomes narrower. In contrast, if the number of characters in the zone is relatively small, the zoning server 10 may adjust the area of the zone, which is a part of the virtual space 2, by the boundary lines 3 such that the area becomes wider.

As an example, when the number of characters in the initial first zone 100 is "5," the number of characters in the second zone 200 is "3," the number of characters in the third zone 300 is "4," and the number of characters in the fourth zone 400 is "8," the characters in the respective zones move among the respective zones on the basis of the operation commands received from the player terminals 30, after which the number of characters in the first zone 100 becomes "3," the number of characters in the second zone 200 becomes "14," the number of characters in the third zone 300 becomes "3," and the number of characters in the fourth zone 400 becomes "0." At this time, the number of characters managed by the management server A 21 may change from "5" to "3," and the management server A 21 may receive operation commands from the player terminals 30 that operate these three characters. In the same manner, the management servers that manage the second zone 200, the third zone 300, and the fourth zone 400 may also receive operation commands different from those initially received, due to changes in the numbers of characters.

In this example, because of the relatively large number of characters in the second zone 200, the management server B 22 that manages the second zone 200 receives operation commands of players from a relatively large number of player terminals 30, increasing the processing load on the management server B 22. Further, the management server A 21 that manages the first zone 100, the management server C 23 that manages the third zone 300, and the management server D 24 that manages the fourth zone receive operation commands of players from relatively less player terminals 30 than the management server B 22 that manages the second zone 200, and the processing loads of the management server A 21, the management server C 23, and the management server D 24 are relatively lower than that of the management server B 22. In this case, to evenly distribute the processing load among the management servers, the zoning server 10 adjusts the area of zones that the respective management servers can manage so that the difference in the numbers of player terminals operating characters in the respective zones is reduced. As a result of the adjustment, the number of player terminals that operate characters in the zones managed by the respective management servers may all become "5."

### Example 2

Hereinafter, the second example of zoning the virtual space by the zoning server 10 according to the present disclosure will be described. In the present embodiment, the zoning server 10 may zone the virtual space on the basis of the total number of characters, including characters operable by players (hereinafter, referred to as general characters) and non-player characters (NPCs) arranged in the virtual space and not operable by players (hereinafter, referred to as NPC characters). Details will be described below.

Normally, when players play a game on the player terminals 30, the zoning server 10 receives operation information of the players from a plurality of player terminals. At each management server, the processing load tends to increase as the number of connected player terminals increases and the amount of operation information received from the respective player terminals increases. Further, the greater the number of NPC characters in a zone managed by the management server 20 is, the more the management server 20 must transmit, to the player terminals, information regarding NPC characters present within a predetermined range corresponding to each general character, and thus the processing load also increases due to an increase in the number of NPC characters.

Image information indicating events taking place in the virtual space may always be transmitted to the player terminals 30 via the management server 20. Specifically, when a player enters operation commands on each player terminal, the management server 20 controls a general character on the basis of the operation commands entered by the player, and causes an interaction with another general character or an NPC character. As a result, image information indicating events between general characters, image information indicating events between NPC characters, and image information indicating events between general characters and NPC characters are transmitted to the player terminal 30. At this time, even in a case where the number of general characters belonging to a certain zone is small, if the number of NPC characters belonging to that zone is high, the load of the management server 20 may become higher due to an increase in the amount of image information indicating events related to NPC characters.

Accordingly, the zoning server 10 according to the present embodiment may estimate a replication amount on the basis of the number of general characters and the number of NPC characters in zones managed by the respective management servers, and adjust the zone areas. The replication amount in the present disclosure may be a communication data size communicated between each management server and connected player terminals, or may be the total amount of data transmitted and received between the management server and the connected player terminals within a predetermined time period (for example, one minute, but not limited thereto, and may be one second or five minutes). Replication may be a process of synchronizing the state of the game between the management server 20 and player terminal 30, and thus the amount of replication may correspond to the amount of communication data for state synchronization. As an example, if the total number of characters (total number of general and NPC characters) is greater in a certain zone, the management server belonging to that zone may estimate that the amount of replication due to the number of characters in that zone is greater and adjust the area of that zone to be relatively narrower. If the total number of characters is relatively low in a certain zone, the management server belonging to that zone may estimate that the amount of replication due to the number of characters in that zone is low and adjust the area of that zone to be relatively wider.

### Example 3

Hereinafter, the third example of zoning the virtual space by the zoning server 10 according to the present disclosure will be described. In the third example of this disclosure, on the basis of the second example, the area of the zone may be adjusted by weighting each type of character and computing a numerical value in consideration of the weight. Specifically, a load generated at a time when a player enters operation commands on the player terminal 30 and the management server 20 controls a general character in accordance with the entered operation commands tends to be greater than a load generated at a time when the management server 20 controls an NPC character. In contrast, when the management server 20 autonomously controls an NPC character, processing on the basis of predetermined behavior patterns and rules is sufficient, and thus real-time and individual response are less, and the processing load tends to be less than that for controlling a general character.

In this case, the zoning server 10 in the third example may assign different weights for each type of character in accordance with the loads generated by general characters and NPC characters in each zone. The zoning server 10 may adjust the zone areas such that the management server 20 having a relatively greater number of general characters present in its allocated zone has a relatively smaller zone area. As an example, if the load generated by a general character in the management server 20 is twice the load generated by an NPC character in the management server 20, the zoning server 10 may assign a weight of "2" to the general character and a weight of "1" to the NPC character.

This allows the zoning server 10 to adjust the area of each zone by computing the sum of the loads present in each zone on the basis of the weights assigned in advance. For example, if the number of characters present in a certain zone is five, of which three are general characters and two are NPC characters, the management server may assign a weight value of "2" to each general character and a weight value of "1" to each NPC character, and then compute the sum of the loads of the zone as "8." The sums of loads of other zones may be computed in the same manner.

After the management server 20 computes the sum of the loads for each zone, the zoning server 10 may adjust the area of each zone in accordance with the sum of the loads computed by the management server 20. Specifically, if the sum of the loads computed by the management server 20 is high, the zoning server 10 may adjust the area of the zone corresponding to the sum of the loads to be relatively narrower. In contrast, of the sum of the loads computed by the management server 20 is less, the zoning server 10 may adjust the area corresponding to the sum of the loads to be relatively wider.

### Example 4

Hereinafter, the fourth example of zoning the virtual space by the zoning server 10 according to the present disclosure will be described. In this example, the zoning server 10 may adjust the areas of the zones on the basis of the frame per second (FPS) values of the respective management servers 20. The method of computing the FPS value is not limited, and the FPS value may be computed by measuring how many images or video frames are generated per second usually at each management server. [Equation 1] $FPS = Number of Frames Processed / Elapsed Time \left(Seconds\right)$

The management server 20 according to the present embodiment may monitor in real time fluctuations in the number of frames processing information in each zone. In general, if the FPS value of a certain management server is less, the zoning server 10 may determine that the number of times processable per second is less and that the processing load of that management server is greater. In contrast, if the FPS value of a certain management server is greater, the zoning server 10 may determine that the number of times processable per second is greater and that the processing load of that management server is less.

In this case, the zoning server 10 in the fourth example may zone the virtual space in accordance with the processing load determined by the management servers 20 on the basis of the FPS values of the respective management servers 20 in the virtual space. Specifically, if the processing load of a certain management server is relatively high, the zoning server 10 may adjust the area of the zone managed by that management server to be relatively smaller. In contrast, if the processing load of a certain management server is less, the zoning server 10 may adjust the area of the zone managed by that management server to be relatively wider. However, the zoning server 10 is not limited to a method of estimating the processing load of the management servers 20 on the basis of the FPS values in the respective zones of the virtual space and adjusting the areas of the respective zones, and may compute FPS values on the player terminal 30 side on the basis of the amount of image information received by each user terminal, thereby determining the processing load of the player terminal 30 and adjusting the area of the zone.

### Example of Operation of Zoning System 1

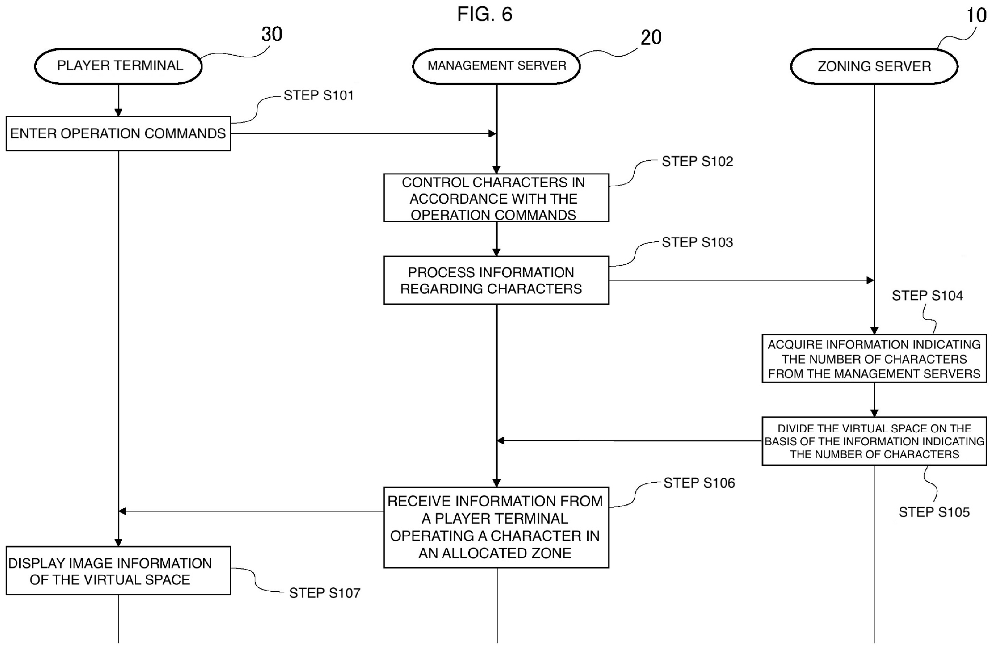

FIG. 6 shows a sequence diagram illustrating an example of an operation of the zoning system 1 according to the present disclosure. In the zoning system 1, a plurality of players enter operation commands to operate their own operable characters in the virtual space at their respective player terminals (step S101). The management servers 20 in the zoning system 1 receive the operation commands from the player terminals that operate the characters in the respective zones managed thereby (step S102).

Next, each management server in the zoning system 1 operates characters in its zone on the basis of the operation commands received from the player terminals, and transmits, to the zoning server 10, information indicating results of the operations (step S103). The information indicating the results of the operations according to the present embodiment may correspond to information indicating the number of characters present in the zone managed by each management server.

After the zoning server 10 acquires information indicating the number of characters (i.e., number-of-characters information) from each management server (step S104), it divides the virtual space on the basis of the number-of-characters information (step S105). The method of dividing the virtual space according to the present embodiment is not limited, and the zoning server 10 may divide the virtual space on the basis of the number-of-characters information of the characters in the virtual space and the areas of the zones managed by the respective management servers before operation commands are received from the player terminals 30.

After the zoning server 10 divides the virtual space and adjusts the area of each zone, each zone is allocated to a corresponding management server in the zoning system 1 (step S106). At this time, each management server manages only the zone allocated by the zoning server 10 and receives operation commands from player terminals that operate characters in that zone.

The management servers 20 transmit information regarding their respective managed zones to the player terminals 30, and the player terminals 30 display image information received from the respective management servers (step S107). This allows the player terminals 30, management servers 20, and zoning server 10 to operate constantly to process information and distribute the processing loads of the respective components in the zoning system 1.

### Example of Operation of Zoning Server 10

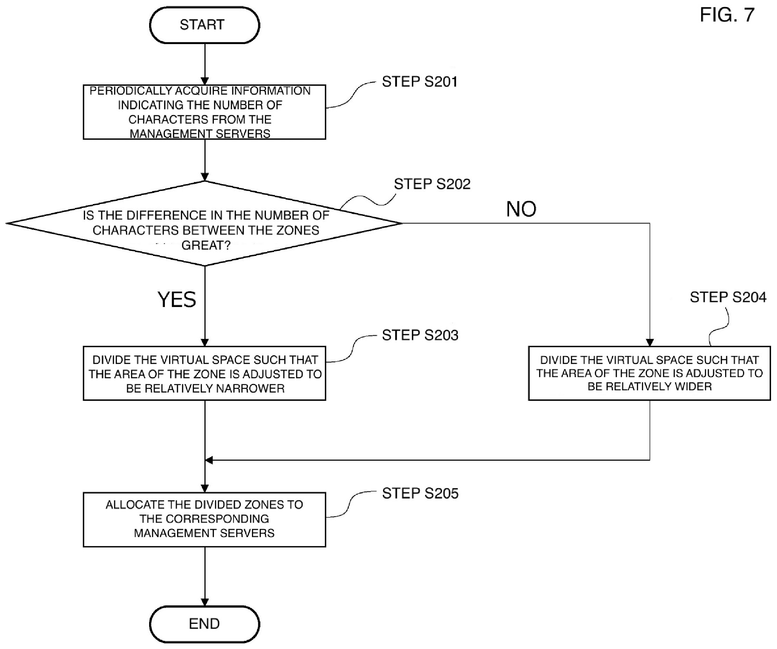

FIG. 7 shows a diagram illustrating an example of an operation of the zoning server 10 according to the present disclosure. Specifically, the zoning server 10 periodically acquires number-of-characters information from the management servers 20 (step S201). The management servers 20 receive operation commands of players from a plurality of player terminals 30. The respective management servers control operations of characters on the basis of the operation commands received from the player terminals 30, and transmit, to the zoning server 10, number-of-characters information indicating results of the operations of the characters.

When the zoning server 10 receives the number-of-characters information from the respective management servers, the zoning server 10 computes differences in the number of characters between zones on the basis of the number-of-characters information in the respective zones (step S202). The differences in the number of characters between the zones according to the present embodiment indicate differences between the number of characters in a certain zone and the number of characters in zones connected to that zone. With reference to FIGS. 4 and 5 as an example, the first zone 100 is connected to the second zone 200 and the fourth zone 400. In this case, the management servers 20 may use, as a difference in the number of characters, information indicating a difference between the number of characters in the first zone 100 and the number of characters in the second zone 200, and may also use, as a difference in the number of characters, information indicating a difference between the number of characters in the first zone 100 and the number of characters in the fourth zone 400.

Then, after the zoning server 10 receives information indicating differences in the number of characters from the management servers 20, the zoning server 10 adjusts the areas of the respective zones on the basis of the differences in the number of characters. If the difference in the number of characters is great (YES in step S202), the zoning server 10 divides the virtual space such that the area of a zone having a greater number of characters is adjusted to be narrower (step S203). In contrast, if the difference in the number of characters is less (NO in step S202), the zoning server 10 divides the virtual space such that the area of a zone having a less number of characters is adjusted to be wider (step S204).

Finally, the zoning server 10 allocates the divided zones to corresponding management servers (step S205). This allows the zoning server 10 to keep the number of characters in each zone even by dividing the virtual space on the basis of information indicating the difference in the number of characters, and the processing loads on the respective management servers are also equalized.

### Example of Operation of Management Server 20

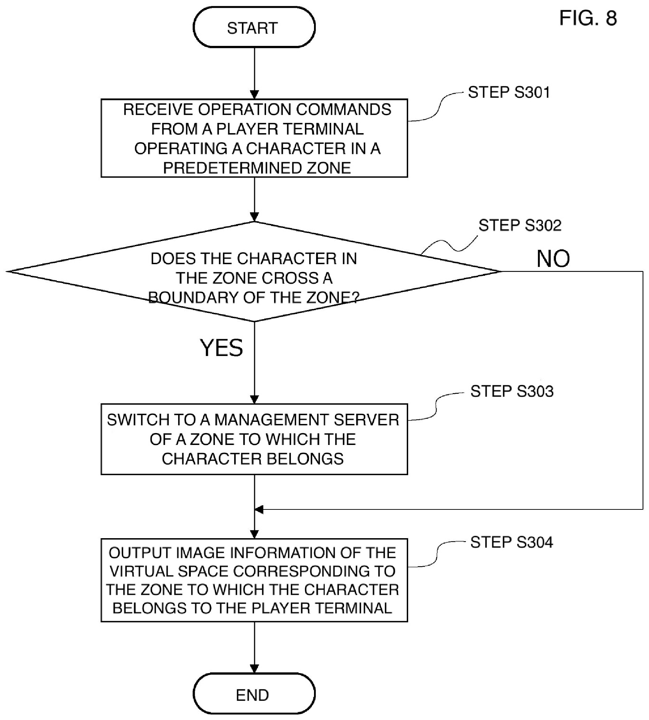

FIG. 8 shows a diagram illustrating an example of an operation of the management server 20 according to the present disclosure. Specifically, first, the management server 20 receives operation commands of players from a plurality of player terminals (step S301). In this case, each management server receives operation information only from the player terminals 30 that operate characters in the zone the management server manages.

The management server 20 then always determines whether the characters in the zone it manages cross a boundary of the zone (step S302). If a character in the zone crosses a boundary of the zone (YES in step S302), the first management server operating that character switches to the management server of the zone to which the character belongs at the current time (step S303).

In contrast, if a character in the zone does not cross a boundary of the zone (NO in step S302), the management server may continuously receive operation information from the player terminal operating that character and operate that character without the need to switch. Finally, the management server 20 transmits, to the player terminal 30 that operates the character, image information in the zone to which the character belongs (step S304).

The zoning system 1 according to the present embodiment is as described above. Examples of operation and implementation of the zoning server 10 and management servers 20 in the zoning system 1 are not limited to this, and the number of zoning servers 10 and management servers 20 mounted in the zoning system 1 is not limited and may vary depending on the type of game or the number of players. On the other hand, the same reference numerals are assigned to the same or equivalent components, processes, and signals shown in the respective drawings, and redundant description is omitted as appropriate. Further, in the respective drawings, some components that are not important for description are omitted from illustration.

### Supplemental Description

The zoning system 1 according to the above embodiment has been described, but the present invention is not limited to the above embodiment. Various variations will be described below.
(1) In the above examples, the zoning system 1 according to the present disclosure may implement dynamic zoning by predicting characters present in the virtual space using artificial intelligence technology (AI). Specifically, the zoning system 1 according to the present disclosure may further include a learning unit, and the learning unit learns a correspondence relationship between a distribution of characters in the virtual space (distribution information) and zones acquired by dividing the virtual space in the case of that distribution. In this case, the zoning system 1 may zone the virtual space and allocate the zones to the management servers 20 in accordance with the distribution information of characters present in the virtual space on the basis of a result of the learning. As an example, if the learning unit learns information indicating that the number of characters present in zone A is always great and the number of characters present in zone B is always less, the zoning server 10 may zone the virtual space on the basis of the learned information, and if the number of characters is great, may cause that zone to become narrower on the basis of the learning result, and if the number of characters is less, may adjust that zone to become wider on the basis of the learning result. This allows the zoning system 1 to perform the function of zoning the virtual space in real time.
(2) In the above examples, although an example has been illustrated in which the zones are divided in accordance with the number of characters on the basis of areas when the virtual space is viewed in plan, the present invention is not limited thereto. The division unit 120 may be adjusted to divide the virtual space into zones in the vertical direction of the virtual space. For example, when the virtual space is a building such as a tower or a skyscraper, floors assigned to the management servers may be allocated as zones in accordance with the number of characters present on the respective floors. As one example, zoning may be performed such that the first floor is allocated to the management server A, the second floor is allocated to the management server B, and the third to fifth floors are allocated to the management server C.
(3) In the above examples, in the zoning method according to the present embodiment, a computer of a zoning server in a zoning system including a plurality of management servers configured to provide respective portions of virtual space and a zoning server configured to allocate the portions of the virtual space to the management servers executes steps of: periodically acquiring, from the management servers configured to provide the respective portions of the virtual space, at least character information indicating the number of characters operated by players included in the portions of the virtual space; dividing the virtual space into a plurality of zones where the dividing step includes dividing the virtual space on the basis of the character information such that a zone becomes relatively narrower when the number of characters is greater and such that a zone becomes relatively wider when the number of characters is less; and allocating the respective zones divided in the dividing step to corresponding management servers. This allows the zoning method to achieve the same advantageous effect as that of the zoning system 1 described above.
(4) In the above examples, in the zoning program according to the present embodiment, a computer of a zoning server in a zoning system including a plurality of management servers configured to provide respective portions of virtual space and a zoning server configured to allocate the portions of the virtual space to the management servers is caused to execute the functions of: periodically acquiring, from the management servers configured to provide the respective portions of the virtual space, at least character information indicating the number of characters operated by players included in the portions of the virtual space; dividing the virtual space into a plurality of zones where the dividing function includes dividing the virtual space on the basis of the character information such that a zone becomes relatively narrower when the number of characters is greater and such that a zone becomes relatively wider when the number of characters is less; and allocating the respective zones divided by the dividing function to corresponding management servers. This allows the zoning program to achieve the same advantageous effect as that of the zoning system 1 described above.
(5) In the above examples, the zoning system 1 according to the present embodiment may be implemented using, for example, object-oriented programming languages such as ActionScript, JavaScript (registered trademark), Python (registered trademark), C language, C++, C#, and Java (registered trademark).
(6) In the above examples, in the zoning system 1, the zoning server 10 and the management server 20 in the zoning system 1, and control procedures of the respective components, especially processing procedures described with reference to the flowcharts and block diagrams according to the present embodiment, the processing methods and procedures may include omission of a part thereof, addition of a new part thereto, replacement between procedures, and reordering, and processing procedures subjected to such omission, addition, or change in order are also included within the scope of the present disclosure if they do not depart from the spirit of the present disclosure.

### Description of Reference Numerals

1: Zoning System
2: Virtual Space
3: Boundary Line
10: Zoning Server
20: Management Server
21: Management Server A
22: Management Server B
23: Management Server C
30: Player Terminal
31: Player Terminal A
32: Player Terminal B
33: Player Terminal C
34: Player Terminal D
35: Player Terminal E
36: Player Terminal F
110: Acquisition Unit
120: Division Unit
130: Allocation Unit
140: First Storage
210: Reception Unit
220: Determination Unit
230: Switching Unit
240: Second Storage
250: Information Transmission Unit
260: Output Unit
100: First Zone
200: Second Zone
300: Third Zone
400: Fourth Zone

## Claims

1. A zoning system (1) comprising: a plurality of management servers (20) configured to provide respective portions of virtual space (2); and a zoning server (10) configured to allocate the respective portions of virtual space (2) to the management servers (20), wherein
the zoning server (10) includes:
an acquisition unit (110) configured to periodically acquire, from the management servers (20), at least character information indicating a number of characters operated by players included in the portion of the virtual space (2);
a division unit (120) configured to divide the virtual space (2) into a plurality of zones on the basis of the character information such that, when the number of characters is greater, a corresponding zone becomes relatively narrower, and, when the number of characters is less, a corresponding zone becomes relatively wider; and
an allocation unit (130) configured to allocate each of the zones divided by the division unit (120) to a corresponding management server (20), and
the management servers (20) each include:
a reception unit (210) configured to receive, from a player terminal (30) operating a character included within a range indicated by the zone allocated by the allocation unit (130) as the portion of the virtual space (2), an operation command; and
an output unit (260) configured to output, to the player terminal (30), image information of the virtual space (2) corresponding to the zone in which the character is operated on the basis of the operation command received by the reception unit (210).

2. The zoning system (1) according to claim 1, wherein
the management servers (20) each further include:
a determination unit (220) configured to determine, on the basis of the operation command, whether the character in the zone crosses a boundary (3) of the zone;
a switching unit (230) configured to switch, if the character crosses the boundary (3), the management server (20) to a management server (20) of a zone to which the character belongs; and
an information transmission unit (250) configured to transmit information on the zone to the zoning server (10).

3. A zoning method performed by a computer of a zoning server (10) in a zoning system (1) including a plurality of management servers (20) configured to provide respective portions of virtual space (2); and the zoning server (10) configured to allocate the respective portions of the virtual space (2) to the management servers (20), the zoning method causing the computer to perform the steps of:
periodically acquiring, from the management servers (20) providing the respective portions of the virtual space (2), at least character information indicating a number of characters operated by players included in the respective portions of the virtual space (2);
dividing the virtual space (2) into a plurality of zones on the basis of the character information such that, when the number of characters is greater, a corresponding zone becomes relatively narrower, and, when the number of characters is less, a corresponding zone becomes relatively wider; and
allocating the respective zones divided in the dividing step to the corresponding management servers (20).

4. A zoning program for causing a computer of a zoning server (10) in a zoning system (1) including a plurality of management servers (20) configured to provide respective portions of virtual space (2); and the zoning server (10) configured to allocate the respective portions of the virtual space (2) to the management servers (20), to execute the functions of:
periodically acquiring, from the management servers (20) providing the respective portions of the virtual space (2), at least character information indicating a number of characters operated by players included in the respective portions of the virtual space (2);
dividing the virtual space (2) into a plurality of zones on the basis of the character information such that, when the number of characters is greater, a corresponding zone becomes relatively narrower, and, when the number of characters is less, a corresponding zone becomes relatively wider; and
allocating the respective zones divided by the dividing function to the corresponding management servers (20).
